# EUROPÄISCHE PATENTSCHRIFT

(11) **EP 2 822 808 B1**
(45) Veröffentlichungstag und Bekanntmachung des Hinweises auf die Patenterteilung: **18.09.2019**
(21) Anmeldenummer: 13711304.9
(22) Anmeldetag: 26.02.2013
(51) Int. Cl.: H02J 1/00

(54) **BORDNETZ FÜR EIN FAHRZEUG**
ON-BOARD POWER SYSTEM FOR A VEHICLE
RÉSEAU DE BORD POUR UN VÉHICULE

(30) Priorität: 06.03.2012 DE 102012203467
(43) Veröffentlichungstag der Anmeldung: 14.01.2015
(73) Patentinhaber: Continental Automotive GmbH, 30165 Hannover (DE)
(72) Erfinder: REICHOW, Dirk, 93173 Wenzenbach (DE); GILCH, Markus, 85419 Mauern (DE)
(86) Internationale Anmeldenummer: PCT/EP2013/053837
(87) Internationale Veröffentlichungsnummer: WO 2013/131783

(56) Entgegenhaltungen:
- WO-A1-2011/068003

## Beschreibung

Die Anmeldung betrifft ein Bordnetz für ein Fahrzeug und ein Fahrzeug mit einem Bordnetz.

Aus der DE 10 2009 008 255 A1 ist ein Verfahren zur Stabilisierung eines Energiebordnetzes eines Kraftfahrzeugs oder eines Nutzfahrzeugs bekannt. Im Betrieb des Verfahrens liegt an einem ersten Bordnetzzweig eine erste Spannung an, wobei an dem ersten Bordnetzzweig ein erster Energiespeicher, ein Generator zur Speisung des ersten Energiespeichers und zumindest ein erster Verbraucher angeschlossen sind. An einem zweiten Bordnetzzweig liegt eine zweite Spannung an, die höher als die erste Spannung ist, wobei an den zweiten Bordnetzzweig ein zweiter Energiespeicher, eine Ladeeinheit zur Speisung des zweiten Energiespeichers, die ferner mit dem ersten Bordnetzzweig gekoppelt ist, und zumindest ein zweiter Verbraucher angeschlossen sind, wobei der erste und der zweite Energiespeicher zur Erzeugung der zweiten Spannung seriell miteinander verschaltet sind. Zur Regelung der Ausgangsspannung und des Ausgangsstroms der Ladeeinheit werden zumindest die erste und die zweite Spannung durch ein jeweiliges Messglied erfasst werden, aus welchen ein Ladestrom für den zweiten Energiespeicher ermittelt und erzeugt wird. Schließlich werden die erfasste erste und/oder zweite Spannung mit einem nicht-linearen Element derart konditioniert, dass die Ladeeinheit den zweiten Energiespeicher bei Spannungsüberhöhungen der ersten Spannung unter erhöhter Energieentnahme aus dem ersten Bordnetzzweig und/oder bei Spannungseinbrüchen der ersten Spannung unter verringerter Energieentnahme aus dem ersten Bordnetzzweig lädt.

Die Druckschrift WO 2011/068003 A1 beschreibt eine Schaltung, bei der eine Batterie und eine Brennstoffzelle seriell schaltbar sind. Die Energiequellen sind an einen Gleichspannungswandler angeschlossen.

Aufgabe der Anmeldung ist es, ein Bordnetz für ein Fahrzeug und ein Fahrzeug mit einem Bordnetz anzugeben, welche eine weiter verbesserte Spannungs-Stabilisierung ermöglichen.

Diese Aufgabe wird mit dem Gegenstand der unabhängigen Ansprüche gelöst. Vorteilhafte Weiterbildungen ergeben sich aus den abhängigen Ansprüchen.

Ein Bordnetz für ein Fahrzeug weist gemäß einem Aspekt der Anmeldung einen ersten Bordnetzzweig mit einer ersten Betriebsspannung U₁ auf, wobei der erste Bordnetzzweig einen ersten Energiespeicher und einen ersten elektrischen Verbraucher aufweist. Zudem weist das Bordnetz einen zweiten Bordnetzzweig mit einer zweiten Betriebsspannung U₂ auf, wobei der zweite Bordnetzzweig einen zweiten Energiespeicher aufweist. Ferner weist das Bordnetz einen dritten Bordnetzzweig mit einer dritten Betriebsspannung U₃ auf, wobei der dritte Bordnetzzweig einen dritten elektrischen Verbraucher aufweist. Darüber hinaus weist das Bordnetz einen DC/DC-Wandler auf, der zum bidirektionalen Übertragen von Energie zumindest zwischen dem ersten Bordnetzzweig und dem zweiten Bordnetzzweig ausgebildet ist. Weiterhin weist das Bordnetz eine erste Schaltvorrichtung auf. Der erste Energiespeicher und der zweite Energiespeicher sind über die erste Schaltvorrichtung derart elektrisch miteinander in Serie schaltbar, dass die dritte Betriebsspannung U₃ durch die erste Betriebsspannung U₁ und die zweite Betriebsspannung U₂ zusammen bereitstellbar ist.

In einer Ausgestaltung ist der DC/DC-Wandler zum bidirektionalen Übertragen von Energie zwischen dem ersten Bordnetzzweig, dem zweiten Bordnetzzweig und dem dritten Bordnetzzweig ausgebildet. Dabei wird hier und im Folgenden unter einem bidirektionalen Übertragen von Energie zwischen dem ersten Bordnetzzweig, dem zweiten Bordnetzzweig und dem dritten Bordnetzzweig verstanden, dass elektrische Energie von zumindest einem der drei genannten Bordnetzzweige in zumindest einen der beiden verbleibenden Bordnetzzweige übertragen wird, wobei dies für sämtliche der genannten Bordnetzzweige gilt, das heißt, es kann ein Austausch von Energie zwischen den genannten Bordnetzzweigen in jeder Richtung erfolgen. Dabei kann ein bidirektionaler Energieübertrag mittels des DC/DC-Wandlers auch indirekt erfolgen, d.h. es kann mittels des DC/DC-Wandlers ein Energieübertrag in einen Bordnetzzweig erfolgen, der mit einem weiteren Bordnetzzweig elektrisch verbunden ist, womit auch ein Energieübertrag in den weiteren Bordnetzzweig erfolgt.

Das Bordnetz gemäß der genannten Ausführungsform ermöglicht eine weiter verbesserte Spannungs-Stabilisierung bei unterschiedlichen Betriebszuständen des Fahrzeugs. Die Spannungs-Stabilisierung wird dabei insbesondere durch das Vorsehen des bidirektionalen DC/DC-Wandlers ermöglicht, wie im Folgenden näher erläutert wird. Weiterhin kann die Zahl an Energiespeichern, die benötigt werden, um zusätzlich zu der ersten Betriebsspannung U₁ und der zweiten Betriebsspannung U₂ die dritte Betriebsspannung U₃ bereitzustellen, in vorteilhafter Weise reduziert werden. Dies erfolgt durch das Bereitstellen der dritten Betriebsspannung U₃ durch die erste Betriebsspannung U₁ und die zweite Betriebsspannung U₂ zusammen. Dabei stellen der erste Energiespeicher, der die erste Betriebsspannung U₁ bereitstellt, und der zweite Energiespeicher, der die zweite Betriebsspannung U₂ bereitstellt, zusammen die dritte Betriebsspannung U₃ bereit, wenn sie über die erste Schaltvorrichtung elektrisch miteinander in Serie geschaltet sind. Dadurch entfällt das Vorsehen eines eigenen Energiespeichers in dem dritten Bordnetzzweig zur Bereitstellung der dritten Betriebsspannung U₃.

In einer Ausführungsform gilt für die erste Betriebsspannung U₁ und die zweite Betriebsspannung U₂ die Beziehung U₂ > U₁. Beispielsweise beträgt U₁ 12 V und U₂ 36 V. Dadurch kann bei einer Serienschaltung des ersten und des zweiten Energiespeichers eine dritte Betriebsspannung U₃ von 48 V bereitgestellt werden.

Der dritte Bordnetzzweig kann zudem eine elektrische Maschine, insbesondere einen Startergenerator, aufweisen. Die elektrische Maschine kann ferner insbesondere als elektrische Antriebsmaschine des Fahrzeugs ausgebildet sein, das heißt bei entsprechendem Betrieb einen Elektromotor bereitstellen, der ein Antriebsaggregat für das Fahrzeug bildet.

Das Bordnetz weist weiterhin einen vierten Bordnetzzweig mit einer vierten Betriebsspannung U₄ auf, wobei der vierte Bordnetzzweig einen vierten elektrischen Verbraucher aufweist. Zudem weist der vierte Bordnetzzweig einen dritten Energiespeicher auf. Die vierte Betriebsspannung U₄ entspricht bevorzugt der ersten Betriebsspannung U₁, das heißt bevorzugt gilt U₁ = U₄. Beispielsweise kann die erste Betriebsspannung U₁ sowie die vierte Betriebsspannung U₄ jeweils 12 V betragen.

Weiterhin weist das Bordnetz eine zweite Schaltvorrichtung auf, wobei der erste Bordnetzzweig und der vierte Bordnetzzweig über die zweite Schaltvorrichtung elektrisch koppelbar sind. Dabei wird hier und im Folgenden unter elektrisch koppelbar verstanden, dass die jeweiligen elektrisch gekoppelten Komponenten miteinander elektrisch verbunden werden können. Dadurch kann ein Energieaustausch zwischen dem ersten Bordnetzzweig und dem vierten Bordnetzzweig erfolgen. Dies ermöglicht wiederum in vorteilhafter Weise eine weiter verbesserte Spannungs-Stabilisierung im Betrieb des Bordnetzes.

In einer weiteren Ausführungsform sind der erste Energiespeicher und der zweite Energiespeicher über die erste Schaltvorrichtung und über die zweite Schaltvorrichtung elektrisch miteinander in Serie schaltbar.

Der erste Bordnetzzweig kann zudem einen Starter eines Verbrennungsmotors des Fahrzeugs und/oder einen Startergenerator aufweisen. Der Starter kann insbesondere als Ritzelstarter oder als Riemenstarter ausgebildet sein. Weiterhin kann der vierte Bordnetzzweig zudem einen Generator aufweisen.

Der erste Energiespeicher, der zweite Energiespeicher und bevorzugt der dritte Energiespeicher sowie der DC/DC-Wandler, die erste Schaltvorrichtung und die zweite Schaltvorrichtung sind in einer Ausführungsform Bestandteil einer Steuereinheit, die auch als Control Unit bezeichnet wird. Damit können die genannten Komponenten in einem einzigen Modul in Form der Steuereinheit bereitgestellt werden. Die Steuereinheit weist dabei bevorzugt vier Anschlüsse auf.

Das Bordnetz weist zudem bevorzugt eine erste Ansteuereinheit auf, die zum Ansteuern der ersten Schaltvorrichtung ausgebildet ist, sowie eine zweite Ansteuereinheit, die zum Ansteuern der zweiten Schaltvorrichtung ausgebildet ist, und eine dritte Ansteuereinheit, die zum Ansteuern des DC/DC-Wandlers ausgebildet ist. Die erste Ansteuereinheit, die zweite Ansteuereinheit und die dritte Ansteuereinheit sind dabei in einer Ausgestaltung des Bordnetzes Bestandteil der Steuereinheit.

Die erste Schaltvorrichtung und/oder die zweite Schaltvorrichtung sind bevorzugt ausgewählt aus der Gruppe, bestehend aus einem Relais und einem Halbleiterschalter, insbesondere einem MOSFET-Schalter. Damit kann eine elektrische Kopplung bzw. Trennung der jeweiligen Komponenten des Bordnetzes über die entsprechende Schaltvorrichtung in einfacher und zuverlässiger Weise erfolgen.

Der DC/DC-Wandler ist in einer weiteren Ausführungsform als Synchronwandler ausgebildet. Damit kann ein Energieübertrag zwischen dem ersten Bordnetzzweig, dem zweiten Bordnetzzweig und dem dritten Bordnetzzweig sowie gegebenenfalls dem vierten Bordnetzzweig in einfacher Weise ermöglicht werden.

Der erste Energiespeicher, der zweite Energiespeicher und/oder der dritte Energiespeicher sind beispielsweise ausgewählt aus der Gruppe, bestehend aus zumindest einem Akkumulator, insbesondere zumindest einem Li-Ionen-Akkumulator oder zumindest einem Bleisäure-Akkumulator, und zumindest einem Kondensator, insbesondere zumindest einem Doppelschichtkondensator.

Weiterhin kann der erste elektrische Verbraucher, der zweite elektrische Verbraucher und/oder der vierte elektrische Verbraucher als dynamischer Hochstromverbraucher ausgebildet sein.

In einer weiteren Ausführung des Bordnetzes sind der erste Energiespeicher und der zweite Energiespeicher als eine gemeinsame Geräteeinheit ausgebildet. Der erste Energiespeicher ist dabei durch zwei Spannungsabgriffe innerhalb des zweiten Energiespeichers kontaktierbar. Die gemeinsame Geräteeinheit weist in dieser Ausführungsform vier Anschlüsse auf.

In einer weiteren Ausgestaltung sind der dritte Energiespeicher und der zweite Energiespeicher als eine gemeinsame Geräteeinheit ausgebildet. Der dritte Energiespeicher ist dabei durch zwei Spannungsabgriffe innerhalb des zweiten Energiespeichers kontaktierbar. Die gemeinsame Geräteeinheit weist in dieser Ausführungsform vier Anschlüsse auf.

Ferner können der erste Energiespeicher und der dritte Energiespeicher als eine gemeinsame Geräteeinheit ausgebildet sein. Der dritte Energiespeicher ist in dieser Ausführungsform durch einen Spannungsabgriff innerhalb des ersten Energiespeichers kontaktierbar. Die gemeinsame Geräteeinheit weist in dieser Ausführungsform drei Anschlüsse auf.

Weiterhin können der Generator und die elektrische Maschine als eine gemeinsame Geräteeinheit ausgebildet sein. Der Generator ist dabei durch einen Spannungsabgriff der elektrischen Maschine kontaktierbar.

Die Anmeldung betrifft zudem ein Fahrzeug, das ein Bordnetz gemäß einer der genannten Ausführungsformen aufweist. Das Fahrzeug ist bevorzugt als Hybridelektrofahrzeug ausgebildet. Insbesondere kann das Fahrzeug als Mikrohybrid- oder Mildhybrid-Elektrofahrzeug ausgebildet sein. Dabei wird unter einem Mikrohybrid-Elektrofahrzeug typischerweise ein Fahrzeug verstanden, bei dem der Elektromotor nicht direkt zum Antrieb des Fahrzeugs genutzt wird, wohingegen bei einem Mildhybrid-Elektrofahrzeug der Elektromotor typischerweise unmittelbar als Antriebsaggregat des Fahrzeugs fungiert. Mikrohybrid-Elektrofahrzeuge weisen dabei ein spezifisches Leistungsgewicht des Elektromotors von typischerweise ca. 2,7 bis 4 kW/t auf. Mildhybrid-Elektrofahrzeuge besitzen eine elektromotorische Leistung von typischerweise ca. 6 bis 14 kW/t.

Das Fahrzeug ist beispielsweise ein Kraftfahrzeug, insbesondere ein Personenkraftwagen oder ein Lastkraftwagen, und kann zudem ein Start/Stopp-System aufweisen, das zum automatischen und/oder manuellen Abschalten bzw. Starten eines Verbrennungsmotors des Fahrzeugs ausgebildet ist.

Das Fahrzeug gemäß der Anmeldung weist die bereits im Zusammenhang mit dem Bordnetz gemäß der Anmeldung genannten Vorteile auf, welche an dieser Stelle zur Vermeidung von Wiederholungen nicht nochmals aufgeführt werden. Insbesondere für ein Fahrzeug mit Start/Stopp-System ist dabei eine weiter verbesserte Spannungs-Stabilisierung von besonderer Bedeutung, da ein Starten des Verbrennungsmotors eine hohe Leistungsaufnahme bedeutet, was zu Spannungseinbrüchen in dem Fahrzeugbordnetz führen kann.

Ausführungsformen der Anmeldung werden nun anhand der beigefügten Figuren näher erläutert.
- Figur 1: zeigt ein Blockschaltbild eines Bordnetzes gemäß einer ersten Ausführungsform der Anmeldung;
- Figur 2: zeigt ein Blockschaltbild eines Bordnetzes gemäß einer zweiten Ausführungsform der Anmeldung;
- Figur 3: zeigt ein Blockschaltbild eines Bordnetzes gemäß einer dritten Ausführungsform der Anmeldung;
- Figur 4: zeigt ein Prinzipschaltbild von Bordnetzen gemäß der Anmeldung.

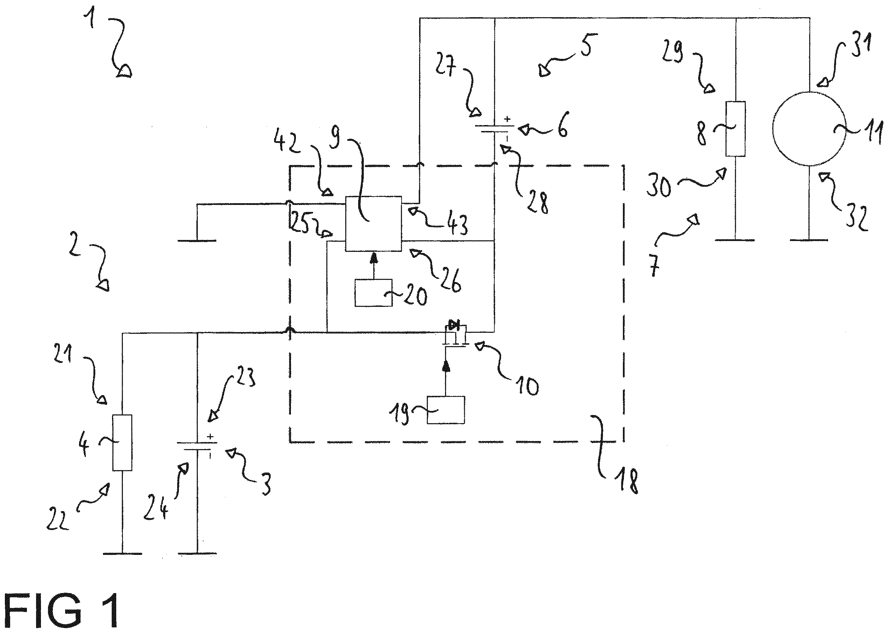

Figur 1 zeigt ein Blockschaltbild eines Bordnetzes 1 eines nicht näher dargestellten Fahrzeugs gemäß einer ersten Ausführungsform der Anmeldung. Das Bordnetz 1 kann beispielsweise Bestandteil eines Kraftfahrzeugs, insbesondere eines Personenkraftwagens oder eines Lastkraftwagens, sein.

Das Bordnetz 1 weist einen ersten Bordnetzzweig 2 mit einer ersten Betriebsspannung U₁ auf, wobei die erste Betriebsspannung U₁ in der gezeigten Ausführungsform 12 V beträgt. Der erste Bordnetzzweig 2 weist einen ersten elektrischen Energiespeicher 3, beispielsweise in Form eines 12V-Akkumulators, insbesondere eines 12V-Li-Ionen-Akkumulators, auf. Zudem weist der erste Bordnetzzweig 2 einen ersten elektrischen Verbraucher 4 auf, der eine dynamische Last bildet. Der erste elektrische Verbraucher 4 kann insbesondere als Starter eines nicht näher dargestellten Verbrennungsmotors des Fahrzeugs ausgebildet sein.

Zudem weist das Bordnetz 1 einen zweiten Bordnetzzweig 5 mit einer zweiten Betriebsspannung U₂ auf. Die zweite Betriebsspannung U₂ beträgt in der gezeigten Ausführungsform 36 V. In dem zweiten Bordnetzzweig 5 ist ein zweiter elektrischer Energiespeicher 6 angeordnet, der beispielsweise als 36V-Li-Ionen-Akkumulator oder als 36V-Doppelschichtkondensator-Anordnung ausgebildet ist.

Das Bordnetz 1 weist ferner einen dritten Bordnetzzweig 7 mit einer dritten Betriebsspannung U₃ auf. In der gezeigten Ausführungsform weist der dritte Bordnetzzweig 7 einen dritten elektrischen Verbraucher 8 sowie eine elektrische Maschine 11 des Fahrzeugs auf. Die elektrische Maschine 11 weist mehrere Betriebszustände auf, wobei sie je nach Betriebszustand einen Startergenerator oder einen Elektromotor des Fahrzeugs bildet. Damit kann die elektrische Maschine 11 je nach Betriebszustand ein variables Drehmoment bereitstellen bzw. elektrische Energie erzeugen oder als Antriebsaggregat des Fahrzeugs fungieren. Der Betriebszustand der elektrischen Maschine 11 wird dabei mittels einer nicht näher dargestellten Steuereinheit eingestellt.

Weiterhin weist das Bordnetz 1 einen DC/DC-Wandler 9 auf. Der DC/DC-Wandler 9 ist als bidirektionaler Gleichspannungswandler ausgebildet, der insbesondere eine erste Spannung in eine zweite Spannung und umgekehrt umwandeln kann. Dazu ist der DC/DC-Wandler 9 in der gezeigten Ausführungsform als Synchronwandler zum bidirektionalen Übertragen von Energie ausgebildet.

Ferner weist das Bordnetz 1 eine erste Schaltvorrichtung 10 auf. Die erste Schaltvorrichtung 10 ist in der gezeigten Ausführungsform als Halbleiterschalter in Form eines normal sperrenden n-Kanal-MOSFET-Schalters ausgebildet.

Der erste Energiespeicher 3 und der zweite Energiespeicher 6 sind über die erste Schaltvorrichtung 10 derart elektrisch miteinander in Serie schaltbar, dass die dritte Betriebsspannung U₃ durch die erste Betriebsspannung U₁ und die zweite Betriebsspannung U₂ zusammen bereitstellbar ist. In der gezeigten Ausführungsform ist somit eine dritte Betriebsspannung U₃ von 48 V in dem dritten Bordnetzzweig 7 durch eine Serienschaltung des ersten Energiespeichers 3 und des zweiten Energiespeichers 6 bereitstellbar.

Die erste Schaltvorrichtung 10 ist dabei in der gezeigten Ausführungsform sourceseitig mit dem Pluspfad des ersten Bordnetzzweigs 2 sowie drainseitig mit dem Minuspfad des zweiten Bordnetzzweigs 5 verbunden. Ein erster Anschluss 23 des ersten elektrischen Energiespeichers 3, der einen Pluspol bildet, kann dadurch über die erste Schaltvorrichtung 10 mit einem zweiten Anschluss 28 des zweiten elektrischen Energiespeichers 6, der einen Minuspol bildet, elektrisch gekoppelt werden.

Der erste Anschluss 23 des ersten elektrischen Energiespeichers 3 ist dabei in einer ersten Schaltstellung der ersten Schaltvorrichtung 10, in der die erste Schaltvorrichtung 10 geschlossen ist, mit dem zweiten Anschluss 28 des zweiten elektrischen Energiespeichers 6 verbunden. In einer zweiten Schaltstellung der ersten Schaltvorrichtung 10, in der diese geöffnet ist, ist der erste Anschluss 23 des ersten elektrischen Energiespeichers 3 elektrisch getrennt von dem zweiten Anschluss 28 des zweiten elektrischen Energiespeichers 6.

Ein zweiter Anschluss 24 des ersten elektrischen Energiespeichers 3, der einen Minuspol bildet, ist mit einem Bezugspotential elektrisch gekoppelt. Ferner ist ein erster Anschluss 27 des zweiten elektrischen Energiespeichers 6, der einen Pluspol bildet, mit dem dritten Bordnetzzweig 7 gekoppelt.

Die erste Schaltvorrichtung 10 ist sourceseitig ferner mit einem ersten Anschluss 21 des ersten elektrischen Verbrauchers 4 sowie einem ersten Anschluss 25 des DC/DC-Wandlers 9, der auf einer Primärseite des DC/DC-Wandlers 9 angeordnet ist, verbunden. Drainseitig ist die erste Schaltvorrichtung 10 weiterhin mit einem zweiten Anschluss 26 des DC/DC-Wandlers 9, der auf einer Sekundärseite des DC/DC-Wandlers 9 angeordnet ist, verbunden. Der zweite Anschluss 26 ist ferner mit dem zweiten Anschluss 28 des zweiten elektrischen Energiespeichers 6 verbunden. Der erste Anschluss 25 ist darüber hinaus mit dem ersten Anschluss 23 des ersten elektrischen Energiespeichers 3 und dem ersten Anschluss 21 des ersten elektrischen Verbrauchers 4 verbunden.

Darüber hinaus weist der DC/DC-Wandler 9 auf der Primärseite einen dritten Anschluss 42 auf, der mit dem Bezugspotential elektrisch gekoppelt ist. Auf der Sekundärseite weist der DC/DC-Wandler 9 ferner einen vierten Anschluss 43 auf, der mit dem ersten Anschluss 27 des zweiten elektrischen Energiespeichers 6 und einem ersten Anschluss 29 des dritten elektrischen Verbrauchers 8 sowie einem ersten Anschluss 31 der elektrischen Maschine 11 mit verbunden ist. Der erste Anschluss 27 des zweiten elektrischen Energiespeichers 6 ist ebenfalls mit dem ersten Anschluss 29 des dritten elektrischen Verbrauchers 8 sowie dem ersten Anschluss 31 der elektrischen Maschine 11 verbunden.

Ein zweiter Anschluss 22 des ersten elektrischen Verbrauchers 4, ein zweiter Anschluss 30 des dritten elektrischen Verbrauchers 8 und ein zweiter Anschluss 32 der elektrischen Maschine 11 sind mit dem Bezugspotential elektrisch gekoppelt.

Das Bordnetz 1 weist weiterhin eine erste Ansteuereinheit 19 auf, die zum Ansteuern der ersten Schaltvorrichtung 10 ausgebildet ist. Mittels der Ansteuereinheit 19 wird die erste Schaltvorrichtung 10 geschlossen und geöffnet, das heißt, in der gezeigten Ausführungsform wird dazu eine entsprechende Spannung an das Gate des n-Kanal-MOSFETs angelegt, bei der ein elektrisch leitender Kanal ausgebildet wird bzw. dieses unterbleibt. Ferner weist das Bordnetz 1 eine dritte Ansteuereinheit 20 auf, die zum Ansteuern des DC/DC-Wandlers 9 ausgebildet ist. Mittels der dritten Ansteuereinheit 20 kann insbesondere die Richtung eines Energieübertrags zwischen den Bordnetzzweigen 2, 5 und 7 über den DC/DC-Wandler 9 festgelegt werden. Weiterhin kann damit der Regelbetrieb des DC/DC-Wandlers 9 festgelegt werden, das heißt, es kann bestimmt werden, ob der DC/DC-Wandler 9 spannungsgeregelt, stromgeregelt oder leistungsgeregelt betrieben wird.

Die erste Ansteuereinheit 19 und die dritte Ansteuereinheit 20 sind dabei mit weiteren, nicht näher dargestellten Fahrzeugkomponenten, insbesondere weiteren Steuereinheiten des Fahrzeugs, gekoppelt, um in Abhängigkeit eines jeweiligen Betriebszustands des Fahrzeugs Ansteuersignale zum Ansteuern der ersten Schaltvorrichtung 10 bzw. des DC/DC-Wandlers 9 zu erzeugen.

In der gezeigten Ausführungsform sind der DC/DC-Wandler 9, die erste Schaltvorrichtung 10, die erste Ansteuereinheit 19 und die dritte Ansteuereinheit 20 Bestandteil einer Steuereinheit 18, die auch als Control Unit (CU) bezeichnet wird.

Der erste Anschluss 23 des ersten elektrischen Energiespeichers 3 bildet in der gezeigten Ausführungsform einen Pol I eines Vierpols. Ein Pol II des Vierpols ist drainseitig der ersten Schaltvorrichtung 10 ausgebildet. Der zweite Anschluss 28 des zweiten elektrischen Energiespeichers 6 bildet einen Pol III sowie der erste Anschluss 27 des zweiten elektrischen Energiespeichers 6 einen Pol IV des Vierpols.

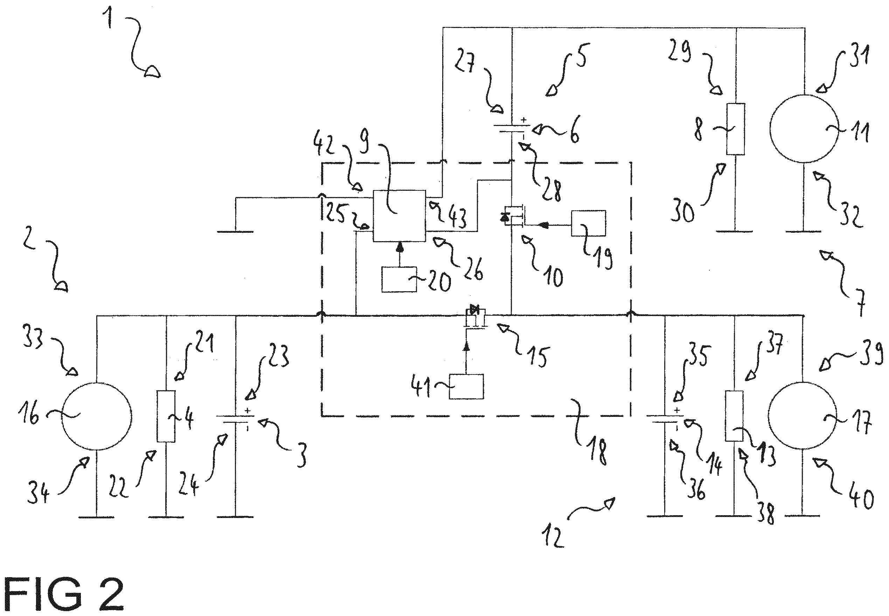

Figur 2 zeigt ein Blockschaltbild eines Bordnetzes 1 eines nicht näher dargestellten Fahrzeugs gemäß einer zweiten Ausführungsform der Anmeldung. Komponenten mit den gleichen Funktionen wie in Figur 1 werden mit den gleichen Bezugszeichen gekennzeichnet und im Folgenden nicht nochmals erläutert.

In der gezeigten Ausführungsform weist das Bordnetz 1 zusätzlich zu dem ersten Bordnetzzweig 2, dem zweiten Bordnetzzweig 5 und dem dritten Bordnetzzweig 7 einen vierten Bordnetzzweig 12 mit einer vierten Betriebsspannung U₄ auf. Die vierte Betriebsspannung U₄ beträgt in der gezeigten Ausführungsform 12 V, das heißt der erste Bordnetzzweig 2 und der vierte Bordnetzzweig 12 weisen in der gezeigten Ausführungsform die gleiche Nominalspannung auf.

Der vierte Bordnetzzweig 12 weist einen vierten elektrischen Verbraucher 13 sowie einen dritten elektrischen Energiespeicher 14 auf. Ferner ist in dem vierten Bordnetzzweig 12 ein Generator 17 angeordnet.

Das Bordnetz 1 weist ferner eine zweite Schaltvorrichtung 15 auf, die in der gezeigten Ausführungsform als Halbleiterschalter in Form eines normal sperrenden n-Kanal-MOSFET-Schalters ausgebildet ist.

Der erste Bordnetzzweig 2 und der vierte Bordnetzzweig 12 sind über die zweite Schaltvorrichtung 15 elektrisch koppelbar. Dazu ist die zweite Schaltvorrichtung 15 sourceseitig mit dem ersten Bordnetzzweig 2 sowie drainseitig mit dem vierten Bordnetzzweig 12 verbunden. Insbesondere ist die zweite Schaltvorrichtung 15 drainseitig mit einem ersten Anschluss 35 des dritten Energiespeichers 14, einem ersten Anschluss 37 des vierten elektrischen Verbrauchers 13 und einem ersten Anschluss 39 des Generators 17 verbunden. Ein zweiter Anschluss 36 des dritten Energiespeichers 14, ein zweiter Anschluss 38 des vierten elektrischen Verbrauchers 13 und ein zweiter Anschluss 40 des Generators 17 sind mit dem Bezugspotential elektrisch gekoppelt.

Das Bordnetz 1 weist ferner eine zweite Ansteuereinheit 41 auf, die zum Ansteuern der zweiten Schaltvorrichtung 15 ausgebildet ist. Mittels der zweiten Ansteuereinheit 41 wird die zweite Schaltvorrichtung 15 geöffnet und geschlossen. Dabei ist der erste Bordnetzzweig 2 in einer ersten Schaltstellung der zweiten Schaltvorrichtung 15, in der diese geschlossen ist, mit dem vierten Bordnetzzweig 12 elektrisch gekoppelt. In einer zweiten Schaltstellung der zweiten Schaltvorrichtung 15, in der diese geöffnet ist, ist der erste Bordnetzzweig 2 von dem vierten Bordnetzzweig 12 elektrisch getrennt.

Die zweite Schaltvorrichtung 15 ist drainseitig ferner mit der Sourceseite der ersten Schaltvorrichtung 10 verbunden. Damit sind in der gezeigten Ausführungsform der erste Energiespeicher 3 und der zweite Energiespeicher 6 über die erste Schaltvorrichtung 10 und über die zweite Schaltvorrichtung 15 elektrisch miteinander in Serie schaltbar.

Ferner weist das Bordnetz 1 in der gezeigten Ausführungsform einen Starter 16 eines nicht näher dargestellten Verbrennungsmotors des Fahrzeugs auf, wobei der Starter 16 in dem ersten Bordnetzzweig 2 angeordnet ist. Der Starter 16 weist einen ersten Anschluss 33 auf, der insbesondere mit der Sourceseite der zweiten Schaltvorrichtung 15 elektrisch gekoppelt ist. Weiterhin weist der Starter 16 einen zweiten Anschluss 34 auf, der mit dem Bezugspotential elektrisch gekoppelt ist.

In der gezeigten Ausführungsform sind der DC/DC-Wandler 9, die erste Schaltvorrichtung 10, die zweite Schaltvorrichtung 15, die erste Ansteuereinheit 19, die zweite Ansteuereinheit 41 und die dritte Ansteuereinheit 20 Bestandteil der Steuereinheit 18. In einer weiteren Ausgestaltung sind die genannten Komponenten über das Bordnetz 1 verteilt angeordnet.

Bei der in Figur 2 gezeigten Ausführungsform sind der dritte Energiespeicher 14 und der zweite Energiespeicher 6 über die erste Schaltvorrichtung 10 schaltbar verbunden. Weiterhin sind der erste Energiespeicher 3 und der dritte Energiespeicher 14 über die zweite Schaltvorrichtung 15 schaltbar verbunden. Dabei ist ein Vorteil in der geometrischen Anordnung des zweiten Energiespeichers 6 und des dritten Energiespeichers 14 zu sehen. In der gezeigten Topologie ist lediglich die erste Schaltvorrichtung 10 in dem Pfad zwischen dem zweiten Energiespeicher 6 und dem dritten Energiespeicher 14 angeordnet.

Ein geeignetes Verhältnis der Ladung des dritten Energiespeichers 14 zu der des zweiten Energiespeicher 6 beträgt typischerweise 1/3, wobei die Ladung in dem dritten Energiespeicher 14 zusammen mit der Ladung in dem zweiten Energiespeicher 6 100 Prozent ergibt. Der zweite Energiespeicher 6 und der dritte Energiespeicher 14 können dabei in einer gemeinsamen Einheit mit vier Anschlüssen ausgebildet sein.

Ein weiterer Vorteil ist auch in der geometrischen Anordnung des ersten Energiespeichers 3 und des dritten Energiespeichers 14 zu sehen. Dabei ist lediglich die zweite Schaltvorrichtung 15 in dem Pfad zwischen dem ersten Energiespeicher 3 und dem dritten Energiespeicher 14 angeordnet. Ein geeignetes Verhältnis zwischen der Ladung des dritten Energiespeichers 14 und der des ersten Energiespeichers 3 beträgt typischerweise 1/3 oder geringer, wobei die Ladung in dem dritten Energiespeicher 14 zusammen mit der Ladung in dem ersten Energiespeicher 3 100 Prozent ergibt. Der erste Energiespeicher 3 und der dritte Energiespeicher 14 können in einer gemeinsamen Einheit mit drei Anschlüssen ausgeführt sein.

Der erste Anschluss 23 des ersten elektrischen Energiespeichers 3 bildet in der gezeigten Ausführungsform einen Pol I eines Vierpols. Ein Pol II des Vierpols ist drainseitig der zweiten Schaltvorrichtung 15 ausgebildet. Der zweite Anschluss 28 des zweiten elektrischen Energiespeichers 6 bildet einen Pol III sowie der erste Anschluss 27 des zweiten elektrischen Energiespeichers 6 einen Pol IV des Vierpols.

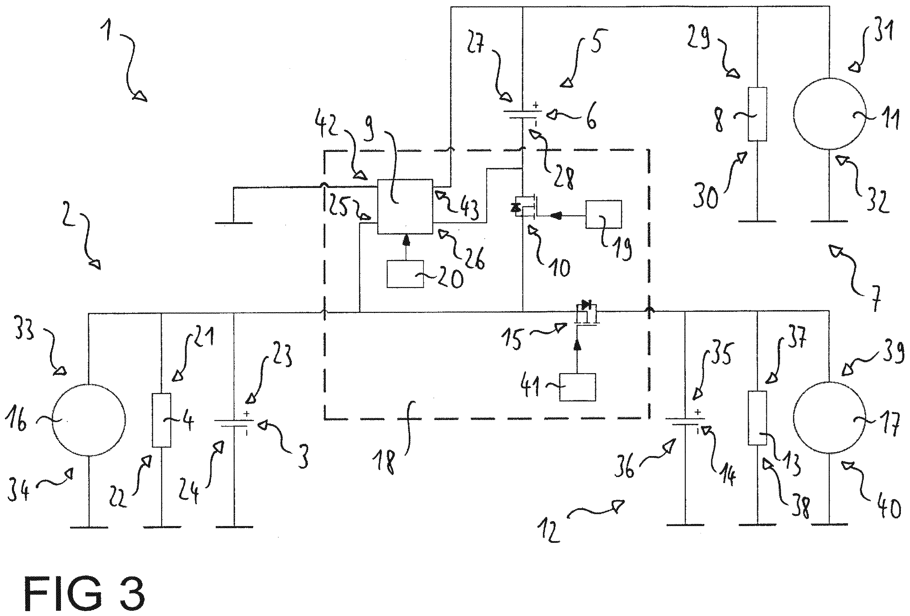

Figur 3 zeigt ein Blockschaltbild eines Bordnetzes 1 eines nicht näher dargestellten Fahrzeugs gemäß einer dritten Ausführungsform der Anmeldung. Komponenten mit den gleichen Funktionen wie in den Figuren 1 und 2 werden mit den gleichen Bezugszeichen gekennzeichnet und im Folgenden nicht nochmals erläutert.

Die in Figur 3 gezeigte dritte Ausführungsform unterscheidet sich von der in Figur 2 gezeigten zweiten Ausführungsform dadurch, dass die zweite Schaltvorrichtung 15 sourceseitig mit der Sourceseite der ersten Schaltvorrichtung 10 verbunden ist. Damit sind in der gezeigten dritten Ausführungsform der erste Energiespeicher 3 und der zweite Energiespeicher 6 lediglich über die erste Schaltvorrichtung 10 elektrisch miteinander in Serie schaltbar.

Weiterhin können der erste Bordnetzzweig 2, der zweite Bordnetzzweig 5, der dritte Bordnetzzweig 7 und/oder der vierte Bordnetzzweig 12 zusätzlich zu den in den Figuren 1 bis 3 gezeigten elektrischen Verbrauchern weitere elektrische Verbraucher aufweisen, d.h. der erste Bordnetzzweig 2, der zweite Bordnetzzweig 5, der dritte Bordnetzzweig 7 und der vierte Bordnetzzweig 12 können jeweils zumindest einen elektrischen Verbraucher aufweisen, wobei der zweite Bordnetzzweig 5 in den gezeigten Ausführungsformen keinen elektrischen Verbraucher aufweist.

Die in den Figuren 1 bis 3 gezeigte Bordnetz-Topologie kann auch als MCP (Multi Combined Powernet) bezeichnet werden und ist dabei eine Kombination aus zumindest zwei Teilnetzen A und B in Form des ersten Bordnetzzweigs 2 sowie des zweiten Bordnetzzweigs 5. Das Netz A weist in den gezeigten Ausführungsformen eine nominale Spannung von 12 V und das Netz B eine nominale Spannung von 36 V auf. Eine Erweiterung der Teilnetze wird dabei dadurch erzielt, dass das Bordnetz A mit dem zusätzlichen Netz B in Serie verschaltet werden kann. Der Schaltvorgang wird durch die Control Unit, das heißt die Steuereinheit 18, kontrolliert. Die Folge der Reihenschaltung aus den Netzen A und B ist die Gestaltung eines neuen Netzes C in Form des dritten Bordnetzzweigs 7 mit einem nominalen Spannungsniveau von in den gezeigten Ausführungsformen 48 V. Die gezeigte MCP-Topologie kommt beispielsweise zur Anwendung in einem Fahrzeug mit möglichem Elektrobetrieb, insbesondere Elektrofahrbetrieb, beispielsweise einem Mikro- oder Mildhybrid-Elektrofahrzeug. Dabei kommen typischerweise jeweils mindestens ein elektrischer Spannungswandler, Verbraucher, Antrieb und Generator sowie zwei elektrische Energiespeicher zum Einsatz.

In der in Figur 3 abgebildeten Topologie besteht der erste Bordnetzzweig 2, der auch als Energiesystem Esys1 bezeichnet wird, aus einem Energiespeicher, der beispielsweise als 12-Volt-Li-Batterie ausgeführt ist, und mindestens einer dynamischen Last, beispielsweise dem Starter. Der zweite Bordnetzzweig 5, der auch als Energiesystem Esys2 bezeichnet wird, besteht aus einem Energiespeicher, der beispielsweise als 36-Volt-Li-Batterie ausgeführt ist. Der vierte Bordnetzzweig 12, der auch als Energiesystem Esys3 bezeichnet wird, besteht in der gezeigten Ausführungsform aus dem optional vorhandenen dritten Energiespeicher 14, der beispielsweise als 12-Volt-Li-Batterie ausgeführt ist, aus dem optional vorhandenen Generator 17 und mindestens einer dynamischen Last. Der Die elektrische Maschine 11, die einen Startergenerator bzw. eine elektrische Antriebsmaschine des Fahrzeugs bilden kann, ist Bestandteil des eigenständigen dritten Bordnetzzweigs 7, der auch als Energiesystem Esys4 bezeichnet wird. Esys4 enthält zudem mindestens eine dynamische Last.

Die elektrische Maschine 11 sowie der Generator 17 können dabei in einer Einheit realisiert sein. Der Generator 17 ist in dieser Ausgestaltung ein entsprechender Spannungsabgriff innerhalb der elektrischen Maschine 11 . Die Nutzung des Generators 17 innerhalb von Esys3 oder alternativ Esys1 erhöht die Redundanz und Verfügbarkeit des Systems.

Weiterhin können der erste Energiespeicher 3 und der zweite Energiespeicher 6 in einer Geräteeinheit realisiert sein. Der erste Energiespeicher 3 ist dabei über zwei Spannungsabgriffe innerhalb der gemeinsamen Geräteeinheit erreichbar. Der erste Energiespeicher 3 und der zweite Energiespeicher 6 können in einer gemeinsamen Einheit mit vier Anschlüssen ausgeführt sein.

Ferner können der erste Energiespeicher 3 und der dritte Energiespeicher 14 in einer Geräteeinheit realisiert sein. Der dritte Energiespeicher 14 ist dabei ein Spannungsabgriff innerhalb der gemeinsamen Geräteeinheit. Der erste Energiespeicher 3 und der dritte Energiespeicher 14 sind in dieser Ausgestaltung in einer gemeinsamen Einheit mit drei Anschlüssen ausgeführt.

Darüber hinaus können der zweite Energiespeicher 6 und der dritte Energiespeicher 14 in einer Geräteeinheit realisiert sein. Der dritte Energiespeicher 14 ist dabei über zwei Spannungsabgriffe innerhalb der gemeinsamen Geräteeinheit erreichbar. Der zweite Energiespeicher 6 und der dritte Energiespeicher 14 werden in dieser Ausgestaltung in einer gemeinsamen Einheit mit vier Anschlüssen ausgeführt.

Die Speicherkapazität für elektrische Ladung des ersten elektrischen Energiespeichers 3 ist bevorzugt deutlich größer als die Ladung des zweiten elektrischen Energiespeichers 6 sowie des dritten elektrischen Energiespeichers 14. Durch diese Ausgestaltungen dominiert das Energiesystem Esys1 und bleibt innerhalb der Topologie konservativ priorisiert. Diese Auslegung des ersten Energiespeichers 3 erhöht die Redundanz und Verfügbarkeit sowie die Spannungs-Stabilität des Systems.

Weiterhin ist der Ohmsche Innenwiderstand der ersten Energiespeichervorrichtung 3 bevorzugt möglichst klein auszulegen, beispielsweise ca. 5 mΩ oder geringer. Dadurch minimiert sich der Spannungseinbruch innerhalb von Esys1, wenn der Motor des Fahrzeugs über den Starter 16, beispielsweise in Form eines Ritzelstarters, gestartet wird. Die Nutzung des Starters 16 erhöht die Redundanz und Verfügbarkeit des Systems. Ein sehr kleiner Innenwiderstand in dem ersten Energiespeicher 3 ermöglicht gegebenenfalls den Verzicht auf den dritten Energiespeicher 14 sowie die zweite Schaltvorrichtung 15.

Für einen sicheren Generatorbetrieb mit dem Startergenerator ist dieser mit den Energiespeichern aus Esys1 bzw. Esys3 und Esys2 gekoppelt, da ansonsten die Möglichkeit einer Bordnetzkollabierung in Esys4 besteht. In diesem Fall würde die dynamisch Last, das heißt der dritte elektrische Verbraucher 8, mehr Energie benötigen, als der Startergenerator liefern kann. Für eine elektrische Verbindung zu dem zweiten Energiespeicher 6 mit der Reihenschaltung zu dem ersten Energiespeicher 3 wird die erste Schaltvorrichtung 10 geschlossen.

Die in der gezeigten Ausführungsform ebenfalls vorhandene Body-Diode in der ersten Schaltvorrichtung 10, die als NMOS-Transistor ausgeführt ist, kann den Strom durch die Diode in Richtung des dritten elektrischen Verbrauchers 8 fließen lassen und somit das Netz C stützen. Dabei kann die erste Schaltvorrichtung 10 gegebenenfalls geöffnet sein.

Anstelle oder anteilig zu dem zweiten Energiespeicher 6 kann eine elektrische Verbindung von Netz A nach Netz B mit dem DC/DC-Konverter, d.h. dem DC/DC-Wandler 9, hergestellt werden. Der DC/DC-Konverter transportiert dazu Energie aus Esys1 nach Esys2. Das Netz C kann somit Energie aus Netz A und Netz B beziehen.

Unabhängig von dem Schalterzustand der ersten Schaltvorrichtung 10 kann über den DC/DC-Wandler 9 Energie von Esys2 nach Esys1 transportiert werden. Dies ist beispielsweise der Fall, wenn der Hochstromverbraucher in Form des ersten elektrischen Verbrauchers 4 bzw. der in Esys1 angeordnete Starter 16 bei einem Motorstart zu einem Spannungseinbruch in Esys1 und Esys3 führen.

Diese Energiezufuhr durch den DC/DC-Wandler 9 kann geringer ausfallen, wenn ein zusätzlicher Schalter in Form der zweiten Schaltvorrichtung 15 das System Esys3 von Esys1 abtrennt. Der optional verwendete dritte Energiespeicher 14 stellt unabhängig von dem Ladezustand des ersten Energiespeichers 3 Energie für sensitive Lasten, das heißt in der gezeigten Ausführungsform den vierten elektrischen Verbraucher 13, zur Verfügung. Bei kritischen Spannungseinbrüchen innerhalb von Esys1 kann die zweite Schaltvorrichtung 15 geöffnet werden. Der vierte elektrische Verbraucher 13 bleibt dabei über den dritten elektrischen Energiespeicher 14 im Wesentlichen konstant versorgt. Erweiternd kommt der optional verwendete Generator 17 innerhalb von Esys3 zum Einsatz. Dieser kann dem dritten elektrischen Energiespeicher 14 und bei geschlossener zweiter Schaltvorrichtung 15 elektrische Ladung zuführen.

Insbesondere die in Figur 3 gezeigte Topologie ist in der Lage, redundante Energieflüsse zu organisieren, wie im Folgenden erläutert wird.

Das Netz A bzw. der erste elektrische Energiespeicher 3 kann durch den Startergenerator in Netz C geladen werden, wobei die erste Schaltvorrichtung 10 geschlossen ist und die zweite Schaltvorrichtung 15 geöffnet oder geschlossen sein kann.

Netz A bzw. der erste Energiespeicher 3 kann zudem durch den DC/DC-Wandler 9 geladen werden, wobei die erste Schaltvorrichtung 10 geöffnet oder geschlossen ist und die zweite Schaltvorrichtung 15 geöffnet oder geschlossen ist.

Netz A bzw. der erste Energiespeicher 3 kann weiterhin durch den Generator 17 geladen werden, wobei die erste Schaltvorrichtung 10 geöffnet oder geschlossen ist und die zweite Schaltvorrichtung 15 geschlossen ist.

Netz B bzw. der zweite Energiespeicher 6 kann durch den Startergenerator geladen werden, wobei die erste Schaltvorrichtung 10 geschlossen ist und die zweite Schaltvorrichtung 15 geöffnet oder geschlossen ist.

Netz B bzw. der zweite Energiespeicher 6 kann ferner durch den DC/DC-Wandler 9 geladen werden, wobei die erste Schaltvorrichtung 10 geöffnet oder geschlossen und die zweite Schaltvorrichtung 15 geöffnet oder geschlossen ist.

Netz C bzw. der dritte elektrische Verbraucher 8 kann durch den Startergenerator versorgt werden, wobei die erste Schaltvorrichtung 10 geöffnet oder geschlossen und die zweite Schaltvorrichtung 15 geöffnet oder geschlossen ist.

Ferner kann Netz C bzw. der dritte elektrische Verbraucher 8 durch den DC/DC-Wandler 9 versorgt werden, wobei die erste Schaltvorrichtung 10 geschlossen oder geöffnet ist und die zweite Schaltvorrichtung 15 geöffnet oder geschlossen ist.

Der vierte Bordnetzzweig 12, der auch als Netz A* bzw. A# bezeichnet wird, bzw. der dritte Energiespeicher 14 kann durch den Generator 17 geladen werden, wobei die erste Schaltvorrichtung 10 geöffnet oder geschlossen und die zweite Schaltvorrichtung 15 geöffnet oder geschlossen ist.

Netz A* bzw. der dritte Energiespeicher 14 kann ferner durch den ersten Energiespeicher 3 geladen werden, wobei die erste Schaltvorrichtung 10 geöffnet oder geschlossen ist und die zweite Schaltvorrichtung 15 geschlossen ist.

Bei geschlossener und idealer zweiter Schaltvorrichtung 15 sind die Netze A und A* bezüglich der Spannung im Wesentlichen identisch.

Durch die obige Energieflussbeschreibung ist eine Dreifachredundanz des Netzes A möglich und somit deren Systempriorität aus Sicht der Funktionsverfügbarkeit und funktionalen Sicherheit verdeutlicht.

Die Steuereinheit 18 steuert bzw. regelt die Energieflüsse innerhalb des Systems. Durch Ermittlung von System und von Fahrzeugzuständen werden die angestrebten nominalen Spannungszustände in den Netzen A, A*, B und C eingestellt und kontrolliert.

Dabei ergeben sich wesentliche Vorteile durch die Reihenschaltung von Esys1 und Esys2. Dadurch können beispielsweise Li-Ionen-Zellen auch in einer minimalen Systemkonfiguration, wie sie in Figur 1 dargestellt ist, eingespart werden, was zu einem Kostenvorteil führt.

Vorteilhaft ist ferner das Redundanzverhalten der Anordnung. Bei einem Ausfall von Esys2 und/oder dem DC/DC-Wandler 9 läuft das System in einem Backup-Modus. Das priorisierte System Esys1 und gegebenenfalls Esys3 bleibt uneingeschränkt erhalten, was im Hinblick auf funktionale Sicherheit von Vorteil ist.

Weiterhin ist die Möglichkeit des Einsatzes von zwei redundanten Generatoren und zwei redundanten Startern vorteilhaft im Hinblick auf eine Verfügbarkeit.

Bei Einsatz des dritten Energiespeichers 14 ergibt sich der Vorteil der Spannungs-Stabilisierung im Netz A*, in dem sensitive Verbraucher betrieben werden können, was wiederum einen Verfügbarkeitsvorteil ermöglicht.

Bei Einsatz des ersten Energiespeichers 3 ergibt sich der Vorteil der Rekuperation in Netz A, womit der flexible Energiefluss unterstützt werden kann und wiederum ein Verfügbarkeitsvorteil verbunden ist.

Bei Einsatz des dritten Energiespeichers 14 ergibt sich der Vorteil der Rekuperation in Netz A*, womit wiederum der flexible Energiefluss unterstützt werden kann und ein Verfügbarkeitsvorteil verbunden ist.

Bei Einsatz des zweiten Energiespeichers 6 ergibt sich der Vorteil der Rekuperation in Netz C, womit wiederum ein flexibler Energiefluss unterstützt werden kann und ein Verfügbarkeitsvorteil verbunden ist.

Ein weiterer Vorteil der Reihenschaltung von Esys1 und Esys2 in den gezeigten Bordnetz-Topologien ist bei einem Kurzschluss von Netz C nach Netz A bzw. A* gegeben. Dabei kann in vorteilhafter Weise eine Überladung in dem 12-Volt-Netz, das heißt dem Netz A bzw. Netz A* vermieden werden, insbesondere, wenn die Motordrehzahl Null ist. Der Kurzschluss findet lediglich innerhalb von Esys2 statt. Der dadurch entstehende hohe Stromfluss kann über eine Sicherung und/oder ein Relais innerhalb dieses Netzpfades beispielsweise durch Öffnen des Relais zeitlich begrenzt werden.

Weiterhin können unkritische Überladungen von Esys1 bzw. Esys3 bei diesem Kurzschluss auch bei Motordrehzahlen verschieden von Null erreicht werden. Dazu ist der Innenwiderstand des ersten Energiespeichers 3 deutlich kleiner als der der elektrischen Maschine 11 auszulegen. Dadurch wird die Spannung in Netz A bzw. A* zunächst nur geringfügig angehoben und kann über einen Kurzschlusserkennungsmechanismus innerhalb der elektrischen Maschine 11 dauerhaft auf unkritischen Werten gehalten werden, das heißt, die elektrische Maschine 11 stoppt den Energiefluss nach Esys1 bzw. Esys3, um einen größeren Systemschaden in dem Bordnetz 1 zu verhindern. Weiterhin kann der DC/DC-Wandler 9 derart aktiviert werden, dass die Kurzschlussenergie zumindest teilweise in Esys2 bzw. Esys3 zurück transportiert wird. Ein Überladeschutz des dritten Energiespeichers kann auch dargestellt werden, wenn die erste Schaltvorrichtung 10 geöffnet wird und der DC/DC-Wandler 9 dabei deaktiviert ist und ein Überladungsschutz für den dritten Energiespeicher derart vorgesehen ist, dass der Ladestrom des Generators begrenzt wird.

Weiterhin sind auch Topologien mit Potentialtrennung mittels der MCP-Topologie darstellbar. Zudem sind Schalteranordnungen auch im Massepfad möglich, d.h. die entsprechenden, in den Figuren 1 bis 3 gezeigten Bordnetz-Komponenten können im Masse- bzw. Minuspfad angeordnet sein. Ferner können zum weiteren Systemschutz vor Überladung und Kurzschlüssen in den Pfaden des ersten Energiespeichers 3, des zweiten Energiespeichers 6 und/oder des dritten Energiespeichers 14 Sicherungen und/oder weitere Schalter eingesetzt werden.

Es ergeben sich somit Kostenvorteile durch eine Reduzierung der Anzahl von beispielsweise Li-Ionen-Zellen, um das Spannungsniveau von beispielsweise 48 V zu erreichen, durch Reduzieren des Raumvolumens, um das Spannungsniveau von beispielsweise 48 V zu erreichen, und durch Gewichtsreduzierung, um das Spannungsniveau von beispielsweise 48 V zu erreichen.

Alternativ zu einer Parallelschaltung von Esys1 und Esys3 ist auch eine Reihenschaltung von Esys1 und Esys3 möglich. Zudem wird in vorteilhafter Weise ein stabiles Spannungsniveau in dem 12-Volt-Netz zum Betrieb von sensitiven Lasten unabhängig von dem 48-Volt-Netz sowie unabhängig von einem Motorstart oder dem jeweiligen Fahrzeugzustand ermöglicht. Durch eine redundante Starterausführung und/oder eine redundante Generatorausführung im 12-Volt- und 48-Volt-Netz erhöht sich die Verfügbarkeit und funktionale Sicherheit. Weiterhin besteht ein Kostenvorteil durch die Möglichkeit der optimalen Systemabstimmung mit Starter, Generator, den jeweiligen Energiespeichern sowie den jeweiligen elektrischen Verbrauchern. Ferner wird eine Beherrschung von beliebigen Kurzschlüssen zwischen den Netzen 48 Volt und 12 Volt sowohl bei einer Motordrehzahl von Null als auch bei Motordrehzahlen ungleich von Null, wenn die systemrelevanten Impedanzen betrachtet werden, ermöglicht.

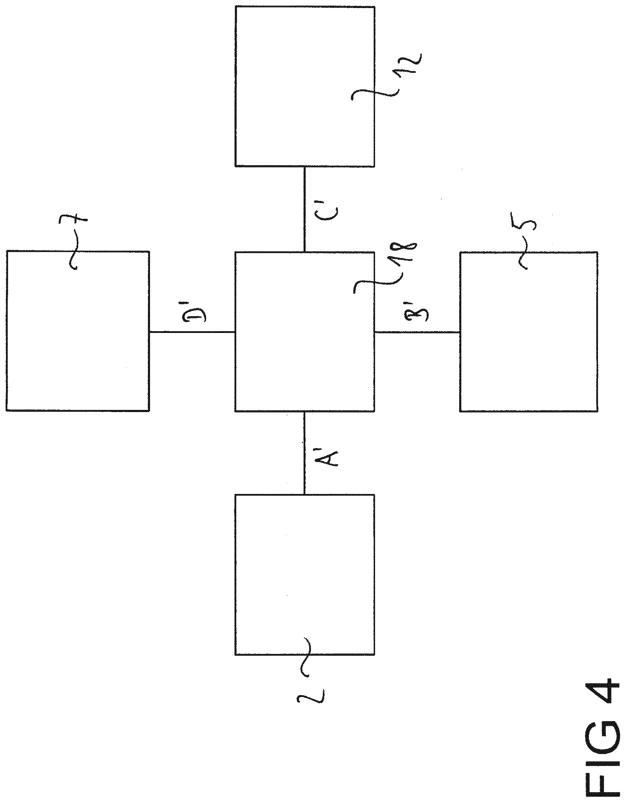

Figur 4 zeigt ein Prinzipschaltbild von Bordnetzen gemäß der Anmeldung. Komponenten mit den gleichen Funktionen wie in den vorhergehenden Figuren werden mit den gleichen Bezugszeichen gekennzeichnet und im Folgenden nicht nochmals erläutert.

Wie in Figur 4 schematisch dargestellt ist, kann ein Energieaustausch zwischen dem ersten Bordnetzzweig 2, der ein erstes Energiesystem Esys1 bildet, dem zweiten Bordnetzzweig 5, der ein zweites Energiesystem Esys2 bildet, dem dritten Bordnetzzweig 7, der ein viertes Energiesystem Esys4 bildet, und dem vierten Bordnetzzweig 12, der ein drittes Energiesystem Esys3 bildet, mittels der Steuereinheit 18 erfolgen. Die Steuereinheit 18 verbindet die vier Energiesysteme Esys1, Esys2, Esys3 und Esys4 miteinander und ermöglicht damit den Energieaustausch zwischen den vier Systemen. Der Energieübertrag zwischen dem ersten Bordnetzzweig 2, dem zweiten Bordnetzzweig 5, dem dritten Bordnetzzweig 7, dem vierten Bordnetzzweig 12 und der Steuereinheit 18 ist dabei in Figur 4 schematisch mittels Kopplungen A', B', C' und D' dargestellt.

### Bezugszeichenliste

- 1: Bordnetz
- 2: Bordnetzzweig
- 3: Energiespeicher
- 4: Verbraucher
- 5: Bordnetzzweig
- 6: Energiespeicher
- 7: Bordnetzzweig
- 8: Verbraucher
- 9: DC/DC-Wandler
- 10: Schaltvorrichtung
- 11: elektrische Maschine
- 12: Bordnetzzweig
- 13: Verbraucher
- 14: Energiespeicher
- 15: Schaltvorrichtung
- 16: Starter
- 17: Generator
- 18: Steuereinheit
- 19: Ansteuereinheit
- 20: Ansteuereinheit
- 21: Anschluss
- 22: Anschluss
- 23: Anschluss
- 24: Anschluss
- 25: Anschluss
- 26: Anschluss
- 27: Anschluss
- 28: Anschluss
- 29: Anschluss
- 30: Anschluss
- 31: Anschluss
- 32: Anschluss
- 33: Anschluss
- 34: Anschluss
- 35: Anschluss
- 36: Anschluss
- 37: Anschluss
- 38: Anschluss
- 39: Anschluss
- 40: Anschluss
- 41: Ansteuereinheit
- 42: Anschluss
- 43: Anschluss

- A': Kopplung
- B': Kopplung
- C': Kopplung
- D': Kopplung

## Patentansprüche

1. Bordnetz (1) für ein Fahrzeug, aufweisend
- **einen ersten Bordnetzzweig (2)** mit einer ersten Betriebsspannung U₁, wobei der erste Bordnetzzweig (2) einen ersten Energiespeicher (3) und einen ersten elektrischen Verbraucher (4) aufweist,
- **einen zweiten Bordnetzzweig (5)** mit einer zweiten Betriebsspannung U₂, wobei der zweite Bordnetzzweig (5) einen zweiten Energiespeicher (6) aufweist,
- **einen dritten Bordnetzzweig (7)** mit einer dritten Betriebsspannung U₃, wobei der dritte Bordnetzzweig (7) einen dritten elektrischen Verbraucher (8) und eine elektrische Maschine (11) aufweist,
- **einen DC/DC-Wandler (9)** ausgebildet zum bidirektionalen Übertragen von Energie zumindest zwischen dem ersten Bordnetzzweig (2) und dem zweiten Bordnetzzweig (5),
- **eine erste Schaltvorrichtung (10)**, wobei der erste Energiespeicher (3) und der zweite Energiespeicher (6) über die erste Schaltvorrichtung (10) derart elektrisch miteinander in Serie schaltbar sind, dass die dritte Betriebsspannung U₃ durch die erste Betriebsspannung U₁ und die zweite Betriebsspannung U₂ zusammen bereitstellbar ist,
**gekennzeichnet durch**
- einen **vierten Bordnetzzweig (12)** mit einer vierten Betriebsspannung U4, wobei der vierte Bordnetzzweig (12) einen vierten elektrischen Verbraucher (13), einen dritten Energiespeicher (14) aufweist;
- wobei der erste Bordnetzzweig (2) zudem einen Starter (16) eines Verbrennungsmotors des Fahrzeugs aufweist und der vierte Bordnetzzweig (12) zudem einen Generator (17) aufweist;
- eine **zweite Schaltvorrichtung (15)**, wobei der erste Bordnetzzweig (2) und der vierte Bordnetzzweig (12) über die zweite Schaltvorrichtung (15) elektrisch koppelbar sind;
- wobei der dritte Energiespeicher (14) und der zweite Energiespeicher (6) über die erste Schaltvorrichtung (10) derart elektrisch miteinander in Serie schaltbar sind, dass die dritte Betriebsspannung U₃ durch die zweite Betriebsspannung U₂ und die vierte Betriebsspannung U₄ zusammen bereitstellbar ist.

2. Bordnetz nach Anspruch 1, wobei gilt U₂ > U₁.

3. Bordnetz nach einem der vorhergehenden Ansprüche, wobei der erste Energiespeicher (3) und der zweite Energiespeicher (6) über die erste Schaltvorrichtung (10) und über die zweite Schaltvorrichtung (15) elektrisch miteinander in Serie schaltbar sind.

4. Bordnetz nach einem der vorhergehenden Ansprüche, wobei der erste Energiespeicher (3), der zweite Energiespeicher (6), der dritte Energiespeicher (14), der DC/DC-Wandler (9), die erste Schaltvorrichtung (10) und die zweite Schaltvorrichtung (15) Bestandteile einer Steuereinheit (18) sind.

5. Bordnetz nach einem der vorhergehenden Ansprüche, wobei die erste Schaltvorrichtung (10) und/oder die zweite Schaltvorrichtung (15) ausgewählt sind aus der Gruppe, bestehend aus einem Relais und einem Halbleiterschalter.

6. Bordnetz nach einem der vorhergehenden Ansprüche, wobei der erste Energiespeicher (3) und der zweite Energiespeicher (6) als eine gemeinsame Geräteeinheit ausgebildet sind, wobei der erste Energiespeicher (3) durch zwei Spannungsabgriffe innerhalb des zweiten Energiespeichers (6) kontaktierbar ist.

7. Bordnetz nach einem der Ansprüche 1 bis 5, wobei der dritte Energiespeicher (14) und der zweite Energiespeicher (6) als eine gemeinsame Geräteeinheit ausgebildet sind, wobei der dritte Energiespeicher (14) durch zwei Spannungsabgriffe innerhalb des zweiten Energiespeichers (6) kontaktierbar ist.

8. Bordnetz nach einem der Ansprüche 1 bis 5, wobei der erste Energiespeicher (3) und der dritte Energiespeicher (14) als eine gemeinsame Geräteeinheit ausgebildet sind, wobei der dritte Energiespeicher (14) durch einen Spannungsabgriff innerhalb des ersten Energiespeichers (3) kontaktierbar ist.

9. Bordnetz nach einem der vorhergehenden Ansprüche, wobei der Generator (17) und die elektrische Maschine (11) als eine gemeinsame Geräteeinheit ausgebildet sind, wobei der Generator (17) durch einen Spannungsabgriff der elektrischen Maschine (11) kontaktierbar ist.

10. Fahrzeug aufweisend ein Bordnetz (1) nach einem der vorhergehenden Ansprüche, wobei das Fahrzeug als Hybridelektrofahrzeug ausgebildet ist.

## Claims

1. On-board power system (1) for a vehicle, having
- **a first on-board power system branch (2)** having a first operating voltage U₁, the first on-board power system branch (2) having a first energy store (3) and a first electrical load (4),
- **a second on-board power system branch (5)** having a second operating voltage U₂, the second on-board power system branch (5) having a second energy store (6),
- **a third on-board power system branch (7)** having a third operating voltage U₃, the third on-board power system branch (7) having a third electrical load (8) and an electrical machine (11),
- **a DC/DC converter (9)** designed to bidirectionally transmit energy at least between the first on-board power system branch (2) and the second on-board power system branch (5),
- **a first switching apparatus (10)**, the first energy store (3) and the second energy store (6) being able to be electrically connected in series with one another via the first switching apparatus (10) in such a manner that the third operating voltage U₃ can be provided by the first operating voltage U₁ and the second operating voltage U₂ together,
**characterized by**
- a **fourth on-board power system branch (12)** having a fourth operating voltage U4, the fourth on-board power system branch (12) having a fourth electrical load (13), a third energy store (14);
- the first on-board power system branch (2) also having a starter (16) of an internal combustion engine of the vehicle, and the fourth on-board power system branch (12) also having a generator (17);
- a **second switching apparatus (15)**, the first on-board power system branch (2) and the fourth on-board power system branch (12) being able to be electrically coupled via the second switching apparatus (15);
- the third energy store (14) and the second energy store (6) being able to be electrically connected in series with one another via the first switching apparatus (10) in such a manner that the third operating voltage U₃ can be provided by the second operating voltage U₂ and the fourth operating voltage U₄ together.

2. On-board power system according to Claim 1, wherein U₂ > U₁.

3. On-board power system according to one of the preceding claims, the first energy store (3) and the second energy store (6) being able to be electrically connected in series with one another via the first switching apparatus (10) and via the second switching apparatus (15).

4. On-board power system according to one of the preceding claims, the first energy store (3), the second energy store (6), the third energy store (14), the DC/DC converter (9), the first switching apparatus (10) and the second switching apparatus (15) being parts of a control unit (18).

5. On-board power system according to one of the preceding claims, the first switching apparatus (10) and/or the second switching apparatus (15) being selected from the group consisting of a relay and a semiconductor switch.

6. On-board power system according to one of the preceding claims, the first energy store (3) and the second energy store (6) being in the form of a common device unit, in which case it is possible to make contact with the first energy store (3) by means of two voltage taps inside the second energy store (6).

7. On-board power system according to one of Claims 1 to 5, the third energy store (14) and the second energy store (6) being in the form of a common device unit, in which case it is possible to make contact with the third energy store (14) by means of two voltage taps inside the second energy store (6).

8. On-board power system according to one of Claims 1 to 5, the first energy store (3) and the third energy store (14) being in the form of a common device unit, in which case it is possible to make contact with the third energy store (14) by means of a voltage tap inside the first energy store (3).

9. On-board power system according to one of the preceding claims, the generator (17) and the electrical machine (11) being in the form of a common device unit, in which case it is possible to make contact with the generator (17) by means of a voltage tap of the electrical machine (11).

10. Vehicle having an on-board power system (1) according to one of the preceding claims, the vehicle being in the form of a hybrid electric vehicle.

## Revendications

1. Réseau de bord (1) pour un véhicule, comportant
- une première branche (2) de réseau de bord ayant une première tension de fonctionnement U₁, la première branche (2) de réseau de bord présentant un premier accumulateur d'énergie (3) et un premier consommateur électrique (4),
- une deuxième branche (5) de réseau de bord ayant une deuxième tension de fonctionnement U₂, la deuxième branche (5) de réseau de bord présentant un deuxième accumulateur d'énergie (6),
- une troisième branche (7) de réseau de bord ayant une troisième tension de fonctionnement U₃, la troisième branche (7) de réseau de bord présentant un troisième consommateur électrique (8) et une machine électrique (11),
- un convertisseur CC-CC (9) conçu pour transmettre bidirectionnellement de l'énergie au moins entre la première branche (2) de réseau de bord et la deuxième branche (5) de réseau de bord,
- un premier dispositif de commutation (10), le premier accumulateur d'énergie (3) et le deuxième accumulateur d'énergie (6) pouvant être connectés électriquement en série l'un avec l'autre par l'intermédiaire du premier dispositif de commutation (10) de telle manière que la troisième tension de fonctionnement U₃ puisse être fournie conjointement par la première tension de fonctionnement U₁ et la deuxième tension de fonctionnement U₂,
**caractérisé par**
- une quatrième branche (12) de réseau de bord ayant une quatrième tension de fonctionnement U₄, la quatrième branche (12) de réseau de bord présentant un quatrième consommateur électrique (13), un troisième accumulateur d'énergie (14) ;
- dans lequel la première branche (2) de réseau de bord comporte également un démarreur (16) d'un moteur à combustion interne du véhicule et la quatrième branche (12) de réseau de bord comporte également un générateur (17) ;
- un deuxième dispositif de commutation (15), la première branche (2) de réseau de bord et la quatrième branche (12) de réseau de bord pouvant être couplées électriquement par l'intermédiaire du deuxième dispositif de commutation (15) ;
- dans lequel le troisième accumulateur d'énergie (14) et le deuxième accumulateur d'énergie (6) peuvent être connectés électriquement en série l'un avec l'autre par l'intermédiaire du premier dispositif de commutation (10) de telle manière que la troisième tension de fonctionnement U₃ puisse être fournie conjointement par la deuxième tension de fonctionnement U₂ et la quatrième tension de fonctionnement U₄.

2. Réseau de bord selon la revendication 1, dans lequel on a U₂ > U₁.

3. Réseau de bord selon l'une des revendications précédentes, dans lequel le premier accumulateur d'énergie (3) et le deuxième accumulateur d'énergie (6) peuvent être connectés électriquement en série l'un avec l'autre par l'intermédiaire du premier dispositif de commutation (10) et du deuxième dispositif de commutation (15).

4. Réseau de bord selon l'une des revendications précédentes, dans lequel le premier accumulateur d'énergie (3), le deuxième accumulateur d'énergie (6), le troisième accumulateur d'énergie (14), le convertisseur CC-CC (9), le premier dispositif de commutation (10) et le deuxième dispositif de commutation (15) sont des parties constitutives d'une unité de commande (18).

5. Réseau de bord selon l'une des revendications précédentes, dans lequel le premier dispositif de commutation (10) et/ou le deuxième dispositif de commutation (15) sont choisis dans le groupe constitué par un relais et un commutateur à semi-conducteur.

6. Réseau de bord selon l'une des revendications précédentes, dans lequel le premier accumulateur d'énergie (3) et le deuxième accumulateur d'énergie (6) sont réalisés sous la forme d'une unité d'appareil commune, le premier accumulateur d'énergie (3) pouvant être mis en contact avec deux prises de tension à l'intérieur du deuxième accumulateur d'énergie (6).

7. Réseau de bord selon l'une des revendications 1 à 5, dans lequel le troisième accumulateur d'énergie (14) et le deuxième accumulateur d'énergie (6) sont réalisés sous la forme d'une unité d'appareil commune, le troisième accumulateur d'énergie (14) pouvant être mis en contact avec deux prises de tension à l'intérieur du deuxième accumulateur d'énergie (6).

8. Réseau de bord selon l'une des revendications 1 à 5, dans lequel le premier accumulateur d'énergie (3) et le troisième accumulateur d'énergie (14) sont réalisés sous la forme d'une unité d'appareil commune, le troisième accumulateur d'énergie (14) pouvant être mis en contact avec une prise de tension à l'intérieur du premier accumulateur d'énergie (3).

9. Réseau de bord selon l'une des revendications précédentes, dans lequel le générateur (17) et la machine électrique (11) sont réalisés sous la forme d'une unité d'appareil commune, le générateur (17) pouvant être mis en contact avec une prise de tension de la machine électrique (11).

10. Véhicule comportant un réseau de bord électrique (1) selon l'une des revendications précédentes, dans lequel le véhicule est réalisé sous la forme d'un véhicule électrique hybride.
